Europäisches Patentamt

European Patent Office

Office européen des brevets

(11) Numéro de publication: **0 342 134**
A1

# (12) DEMANDE DE BREVET EUROPEEN

(21) Numéro de dépôt: 89420163.1

(22) Date de dépôt: 02.05.89

(51) Int. Cl.4: **A 01 N 25/04**

(30) Priorité: 09.05.88 FR 8806494

(43) Date de publication de la demande:
15.11.89 Bulletin 89/46

(84) Etats contractants désignés:
AT BE CH DE ES FR GB GR IT LI LU NL SE

(71) Demandeur: RHONE POULENC AGROCHIMIE
14-20 rue Pierre-Baizet
F-69009 Lyon (FR)

(72) Inventeur: Dookhith, Mohammad M.
Chemin de la Combe
Soucieu en Jarrest F-69510 Thurins (FR)

Linares, Hubert M.
8 avenue des Platanes
F-69300 Caluire (FR)

(74) Mandataire: Ranguis, Patrick Frédéric et al
RHONE POULENC AGROCHIMIE Service DPI B.P. 9163
F-69263 Lyon Cédex 09 (FR)

(54) émulsion pesticide huile dans l'eau, procédé de mise en oeuvre.

(57) La présente invention une émulsion huile dans l'eau pesticide comprenant une substance pesticide lipophile, éventuellement un solvant organique solubilisant ladite substance, de l'eau, un système émulsionnant capable d'assurer la dispersion de la phase huileuse dans la phase aqueuse, ladite émulsion étant caractérisée en ce qu'elle comprend, en outre, un agent dispersant à base de dioxyde de titane.

La présente invention comprend également une suspoémulsion obtenue par ajout à l'émulsion citée ci-dessus d'un pesticide solide, puis broyage.

EP 0 342 134 A1

**Description**

## EMULSION PESTICIDE HUILE DANS L'EAU, PROCEDE DE MISE EN OEUVRE

La présente invention concerne une émulsion concentrée du type huile dans l'eau possèdant une activité pesticide et un procédé de mise en oeuvre de ladite émulsion. Elle concerne également une suspoémulsion obtenue par broyage de ladite émulsion avec une substance pesticide supplémentaire solide.

En général une émulsion résulte de la dispersion, rendue relativement stable au moyen d'un ou plusieurs agents émulsionnants autrement nommés tensio actif, d'un liquide non miscible dans un autre .

Dans le cas général des émulsions à usage pesticide, la phase huileuse dispersée est formée d'une substance pesticide lipophile associée à un ou plusieurs solvants dans le cas où cette substance lipophile est naturellement à l'état solide à la température ou zone de température considérée, tandis que la phase dispersante est constituée d'eau et de divers autres additifs, le ou les agents tensio actifs assurant l'interface entre les deux phases.

Néanmoins ce schéma de principe est loin de permettre à l'homme de métier de résoudre tous les problèmes liés à la réalisation de telles émulsions pour chaque pesticide.

Il est en effet connu que les émulsions, formées à l'avance, de substances lipophiles pesticides dans des milieux aqueux ont tendance à se rompre lorsque ces substances du fait de la variation de température passent de l'état liquide à l'état solide pour revenir à l'état liquide (gel/dégel).

Cet inconvénient est particulièrement dommageable lorsque le point de fusion de telles substances pesticides est dans la zone de variation de température à l'intérieur de laquelle ladite substance est stockée car cela rend la composition impropre à l'utilisation par la suite.

Ainsi, un objet de la présente invention est de proposer une émulsion huile dans l'eau présentant une grande stabilité.

Un autre objet de la présente invention est de rendre stable les émulsions huile dans l'eau à base de substances pesticides ou de mélange de substances pesticides dont le point de fusion est à l'intérieur de la zone de variation thermique de stockage des dites substances.

De même on sait que pour les produits pesticides présentant un point de fusion inférieur à 100°C il est trés difficile de réaliser une suspension aqueuse car ils commencent à changer d'état bien avant leur point de fusion ce qui rend le broyage difficile de ce fait. C'est le cas notamment dans les pays chauds ou en été dans les zones tempérées.

La présente invention permet en conséquence de fournir des compositions stables sous forme liquide avec des composés ayant un point de fusion inférieur à 100°C.

Un autre objet de la présente invention est donc de fournir des compositions améliorées, stables, liquides avec des produits pesticides présentant un point de fusion inférieur à 100°C.

Ainsi dans sa forme la plus générale l'invention se rapporte à une émulsion pesticide du type huile dans l'eau comprenant :
Une substance pesticide lipophile, éventuellement un solvant organique solubilisant ladite substance, de l'eau, un système émulsionnant capable d'assurer la dispersion de la phase huileuse dans la phase aqueuse, ladite émulsion étant caractérisée en ce qu'elle comprend, en outre, un agent dispersant à base de dioxyde de titane

De préférence, l'invention se rapporte à une émulsion pesticide du type huile dans l'eau comprenant :
Une substance pesticide lipophile ayant un point de fusion inférieur à 100°C, éventuellement un solvant organique solubilisant ladite substance, de l'eau, un système émulsionnant capable d'assurer la dispersion de la phase huileuse dans la phase aqueuse, ladite émulsion étant caractérisée en ce qu'elle comprend, en outre, un agent dispersant qui est à base de dioxyde de titane.

De préférence encore, l'invention se rapporte à une émulsion pesticide du type huile dans l'eau comprenant :
Une substance pesticide lipophile ayant un point de fusion située à l'intérieur de la zone de variation thermique à laquelle ladite substance est soumise, notamment lors du stockage, éventuellement un solvant organique solubilisant ladite substance, de l'eau, un système émulsionnant capable d'assurer la dispersion de la phase huileuse dans la phase aqueuse, ladite émulsion étant caractérisée en ce qu'elle comprend, en outre, un agent dispersant à base de dioxyde de titane.

La zone à l'intérieur de laquelle les températures peuvent varier durant le stockage sont habituellement comprises entre -20° et +60°C. Bien entendu des conditions exceptionnelles peuvent aller au dela ou au deça de la zone définie précedemment, mais il faut comprendre que les formulations selon l'une des variantes préférées de l'invention sont utiles dans tous les cas où la variation de température provoque un changement d'état du pesticide.

Par pesticide on entend soit une matière active soit un mélange par exemple binaire ou ternaire de matière active. Ces mélanges peuvent présenter un point eutectique bien connu en chimie physique. Aussi pour ces mélanges l'invention concernera de facon préférée ceux dont le point eutectique est inférieur à 100°C ou ceux dont le point eutectique est situé à l'intérieur de la zone de variation thermique précédemment définie. Mais par ailleurs, l'invention concerne également les mélanges sans point eutectique dont une au moins des substances répond à la définition ci-dessus.

Les substances pesticides sont nombreuses et diverses et il n'est pas dans l'intention du déposant de limiter l'invention à une quelconque catégorie de pesticide si ce n'est qu'ils doivent répondre dans le cas de l'une des variantes préférées de l'invention aux critères définis ci-dessus à savoir présenter un point de fusion inférieur à 100°C ou un point de fusion à l'intérieur de la zone de variation de température indiquée précédemment.

On peut citer à titre non limitatif les insecticides, fongicides, herbicides, nématicides, rodenticides, produits répulsifs.

Parmi ceux-ci on peut citer la phosalone, le mélange aclonifen-oxadiazon, aclonifen-linuron, aclonifen-bifénox, bifénox, acéphate, aclonifen, alachlor, aldicarb, améthryn, aminocarb, amitraz, azamethiphos, azinphos-éthyl, azinphos-méthyl, aziprotryne, bénolaxyl, benfluralin, benzulide, bensultap, benzoximate, benzoylprop-éthyl, bifenthrin, binopacryl, bromophos, bromopropylate, bromoxynil esters, bupirimate, buthiobate, butocarboxim, carboxin, chlorbufam, chlordimeform, chlorfenson, chlormephos, chlorobenzilate, flurochloridone, chloropropylate, chlorphoxim, chlorpropham, chlorpyrifos, chlorpyrifos-méthyl, cloethocarb, cyanophos, cycloate, cycloxydim, cyfluthrin, demethon-S-méthyl, desmetryn, dialifos, diazinon, diclofop, dicofol, diéthatyl, diméthachlor, diméthométhryn, diméthoate, dinobuton, dinoseb, dioxabenzofos, DNOC, EPN, étaconazole, éthalfluralin, éthiofencarb, éthofumesate, famphur, fenamiphos, fenitropan, fenobucarb, fenothiocarb, fenoxaprop, fenoxycarb, fenpropathrin, fenson, flanuprop, fluchloralin, fluorodifen, fluoroglycofen, flurecol, fluroxypyr, formothion, furolaxyl, furmecyclox, haloxyfop, heptenophos, hymexazol, iodofenphos, ioxynil esters, isoprothiolane, linuron, metalaxyl, metazachlor, méthamidophos, méthidathion, méthopotryne, métolcarb, monalide, monocrotophos, monolinuron, myclobutanil, napropamide, nitrapyrin, nitrofen, nitrothal-isopropyl, oxabétrinil, oxadiazon, oxyfluorfen, parathion-méthyl, penconazole, pendiméthalin, pentanochlor, phenthoate, phosfolan, phosmet, piproctanil, pirimicarb, prochloraz, profluralin, promecarb, prometon, propachlor, propamocarb, propanil, propetamphos, propham, propoxur, propthoate, pyrazophos, pyridate, quinalphos, quizalofop, resmethrin, secbumeton, simetryn, tebutan, tefluthrin, temephos, tetramethrin, tetrasul, thiofanox, tolclofos-méthyl, triadimefon, trichlorfon, tridiphane, triflumizole, trifluralin, xylylcarb.

Un mode preféré de réalisation est indiqué à la revendication 7.

L'invention s'est avéré particulièrement intéressante dans le cas des esters de bromoxynil notamment les alcanoates de bromoxynil de $C_1$ à $C_8$ seuls ou en mélange comme le butanoate, l'heptanoate, l'octanoate de bromoxynil qui sont des composés bien connus dans l'art.

La concentration de bromoxynil ester variera avantageusement entre 100 g/l et 600 g/l rapporté au bromoxynil phénol selon les esters ou mélanges d'esters utilisés.

Si la susbtance organique lipophile le requiert, ce qui est le cas pour la majorité, celle-ci est dissoute dans un solvant organique approprié. Dans le cadre de la présente invention le terme solvant recouvre aussi bien un solvant unique qu'un mélange de plusieurs solvants. Le solvant organique particulier n'est évidemment pas critique et on peut utiliser n'importe quel solvant ou mélange de solvants.

Parmi les solvants on peut citer les solvants commerciaux de nature aromatique/paraffinique, comme les solvessos ou les kerosènes ou encore les solvants de type alkylaromatique, aliphatique, cycloaliphatique ou encore les huiles végétales naturelles comme l'huile de colza ou les huiles modifiées.

On peut également citer les alcools comme le cyclohexanol, les cétones comme la cyclohexanone, l'acétophénone, les solvants chlorés comme le tétrachlorure de carbone ou le chloroforme, le diméthylformamide, le diméthylsulfoxydei

Il est en général préférable d'utiliser un couple de solvants, l'un étant plûtot hydrophobe comme les solvants hydrocarbonés cités plus haut et l'autre étant plutot hydrophile comme les solvants fonctionnalisés cités plus haut, la balance entre le solvant hydrophobe et les solvant hydrophyle étant évidemment fonction de la nature du pesticide ou du mélange de pesticide.

Parmi les tensio actifs, on citera en particulier les tensio actifs non ioniques qui résultent de l'action d'au moins une mole d'oxyde d'alkylène, notamment oxyde de propylène, oxyde d'éthylène, avec un composé organique contenant au moins six atomes de carbone et un atome d'hydrogène actif. Ces composés organiques comprennent les phénols et les alcools aliphatiques, les composés mercapto comme le dodecyl mercaptan, l'oleyl mercaptan, le cetyl mercaptan, les thiophénol et thionaphtol, des amides d'acides carboxylique, des sulfonamides, des composés appelés Pluronics comme décrit dans US 2 674 619.

Il est en général souhaitable d'utiliser des produits contenant au plus 30 moles d'oxyde d'alcoylène (notamment oxyde d'éthylène) par reste du composé organique cité ci-dessus.

Parmi les tensio actifs mentionnés ci-dessus on préférera : - les produits d'addition de l'oxyde d'éthylène avec un alkylphénol. Les alkylphénols contiennent un ou plusieurs radicaux alkyles fixés au noyau phénol, le nombre total d'atomes de carbone dans la ou les chaines alkyliques allant de 7 à 24, les alkylphénols préférés étant ceux qui contiennent 1 ou 2 groupements alkyles ayant chacun 7 à 12 atomes de carbone. Ces alkylphénols comprennent également les méthylène phénols obtenus par exemple en condensant des phénols avec le formaldéhyde.

Un exemple particulièrement avantageux est le produit de condensation de 1 à 20 motifs d'oxyde d'éthylène avec le nonylphénol.

- les produits d'addition de l'oxyde d'éthylène avec un produit de condensation obtenu par fixation de composés contenant des groupes hydroxyles phénoliques sur des composés contenant des doubles liaisons oléfiniques et des anneaux de carbone.

Comme représentants de tels produits de condensation, on peut citer les suivants :
mono-(phényl-1 éthyle) phénol, di-(phényl-1 éthyle) phénol, tri-(phényl-1 éthyle) phénol, di-phénylisopropyle phénol, mono-(phényl-1 éthyle) crésol, (phényl-1 éthyle) naphtol et dicyclohexylphénol.

On notera que communémment on appelle la fonction phényl-1 éthyle, la fonction styryle.

Les produits de condensation peuvent être soumis à l'oxalcoylation sous la forme de corps unitaires, mais on peut également les employer sous la forme de mélanges, tels qu'ils s'obtiennent ordinairement dans l'addition par fixation.

Parmi ceux-ci on préferera les mono ou di ou tri (phényl-1 éthyle)phénols ou plus communémment appelés styrylphénols.

Tous ces tensio actifs sont bien connus de l'homme de métier.

On pourra utilement se référer à titre d'exemple non limitatif au brevet francais n° 1 395 059 délivré le 1er Mars 1965.

Néanmoins, dans le cadre de la présente invention, il est préféré de choisir un système émulsionnant formé de deux agents tensio actifs non ioniques, l'un ayant des propriétés hydrophiles et l'autre des propriétés lipophiles.

Ainsi, parmi les agents tensio actifs cités plus haut on choisira, dans le cas des agents hydrophiles, ceux qui comprennent au moins 7 motifs oxyde d'alcoylène; tandis que on choisira les agents tensio actifs comprenant moins de 7 motifs oxyde d'alcoylène dans le cas des agents tensio actifs lipophiles.

On sait que le dioxyde de titane naturel cristallise sous trois variétés allotropiques: rutile, anatase, briokile. Ces trois variétés conviennent dans le cadre de la présente invention.

L'oxyde de titane est fabriqué par la société française THANN et MULHOUSE.

Avantageusement l'émulsion huile dans l'eau comprendra en grammes/litre

| | | |
|---|---|---|
| - subtance pesticide | 100 à 800 | ) |
| - solvant | 0 à 350 | (phase |
| - agent tensio actif hydrophobe | 10 à 100 | )huileuse |
| - agent tensio actif hydrophile | 20 à 60 | |
| - eau | complète à 1000 et un agent dispersant à base de dioxyde de titane. | |

Cet agent dispersant est de préférence présent à raison de 1 g/l à l00g/l d'émulsion, avantageusement 5 g/l à 50 g/l.

Il a été trouvé de manière tout à fait inattendue que l'ajout de cet agent dispersant améliorait grandement la stabilité des émulsions huile dans l'eau.

En plus de cette composition de base, il est avantageux d'incorporer un tensio-actif anionique comme les acides sulfoniques tels que les alcoylbenzène sulfonates à longue chaine, éventuellement sous forme de sels d'amine ou d'ammonium. On utilisera, par exemple, avantageusement le dodecyl benzène sulfonate d'ammonium. En se référant à la composition précédemment décrite on emploiera entre 0 et 10 g/litre, de préférence 2 à 10 g/litre de tensio-actif anionique.

Il est également possible, afin d'abaisser le point de congélation de la suspension et de favoriser, en conséquence, l'aptitude à couler de la composition, d'incorporer un ou plusieurs diols plastifiants comme l'éthylèneglycol, le propylène glycol, le glycérol, le di-ou tri- ou tetra-éthyleneglycol dans une quantité variant habituellement entre 0 et 50 g/l en se réferant à la composition définie ci-dessus.

Il est également possible d'incorporer aux compositions selon l'invention toute sorte d'autres ingrédients et notamment des agents anti-mousse telle qu'une huile siliconée (mélange silice huile silicone), certains alcools ou phénols possédant peu de motifs éthoxylés des agents biocides tels que les acides citriques, propioniques, benzoïques, ou leurs sels ou esters, dans une quantité variant habituellement entre 0 et 50 g/l en se référant à la composition définie ci-dessus.

Outre les constituants précités, les compositions selon l'invention peuvent contenir jusqu'à 50 g/l, des épaississants. Les épaississants sont des produits qui, ajoutés aux émulsions selon l'invention, conférent à ces dernières des propriétés de pseudo plasticité. Les épaississants utilisables dans l'invention peuvent être de nature minérale et/ou organique.

Comme épaississant de type minéral on peut citer les attapulgites, les bentonites, les caponites, et les silices colloïdales.

Comme épaississant de type organique on peut citer les biopolymères hydrophile de type hétéropolysaccharidique à caractère épaississant, les polymères solubles dans l'eau tels que les celluloses, méthyl cellulose et dérivés acryliques, de vinyl pyrrolidone.

Les biopolymères hydrophiles de type hétéropolysaccharidiques utilisables dans l'invention sont des produits connus. Ils ont un poids moléculaire supérieur à 200 000 et de préférence supérieur à 1 000 000; ils ont des propriétés de pseudoplasticité et sont généralement obtenus par action (c'est à dire par fermentation) de bactéries du genre Xanthomonas sur des hydrates de carbone. Ces biopolymères sont aussi quelquefois désignés par d'autres expressions assez diverses telles que : colloïdes hydrophiles de Xanthomonas ; gommes hétéropolysaccharidiques; gommes xanthanes; héteropolysaccharides extracellulaires provenant de Xanthomonas ou de bactéries de la famille des pseudomonacées. Le mot biopolymère est utilisé dans le sens qu'il s'agit de polymère issus d'un procédé biologique (fermentation bactérienne en l'occurence).

Les bactéries utilisées pour la préparation de ces biopolymères sont le plus souvent Xanthomonas compestris, mais on peut aussi utiliser d'autres Xanthomonas telles que Xanthomonas carotae, Xanthomonas incanae, Xanthomonas begoniae, Xanthomonas malvacearum, Xanthomonas vesicatoria, Xanthomonas translucens, Xanthomonas vasculorum. Des hydrates de carbones appropriés pour la fermentation à l'aide de carbones appropriés pour la fermentation, à l'aide de bactéries Xanthomonas sont le glucose, le sucrose, le fructose, la maltose, le lactose, la galactose, l'amidon, la fécule de pomme de terre etc...

Les émulsions concentrées d'huile dans l'eau ci-dessus peuvent être préparées par une technique commode quelconque, mais sont préparées de préférence par la combinaison de l'agent tensio-actif non-ionique hydrophobe avec un mélange du solvant et du pesticide lipophile et ensuite la combinaison du mélange à trois constituants résultant avec la phase aqueuse contenant le tensio actif hydrophile et l'agent dispersant, cette dernière étape étant accompagnée d'une agitation pour former l'émulsion. On obtient une émulsion de qualité plus médiocre quand le ou les agents tensio-actifs (émulsionnants) non-ioniques sont ajouté à la phase aqueuse dans l'étape d'émulsionnemment.

On peut éffectuer également l'addition par technique inverse. C'est à dire mettre la phase huileuse dans la phase aqueuse et c'est un avantage supplémentaire du dioxyde de titane. Ensuite, l'émulsion obtenue est homogénéiser par différentes méthodes :

Ainsi, une méthode consiste à utiliser un disperseur efficace ou un broyeur à billes ou un broyeur colloidal ou un homogénéiseur à piston type APU GAULIN pour obtenir une taille de gouttelettes de diamêtre suffisamment fin (diamêtre médian compris entre 0.5 et 1 micron).

Les émulsions pesticides selon l'invention sont mis en oeuvre par dilution avec de l'eau de manière à obtenir la concentration pesticide efficace.

Comme cela a été brièvement mentionné dans le préambule de la description, les émulsion telles qu'elles viennent d'être décrites peuvent conduire à d'excellentes suspoémulsions par ajout d'une substance pesticide solide qui est ensuite broyée au moyen d'un broyeur.

Ces suspoémulsions sont notamment utiles dans le cas des mélanges avec le carbaryl ou le thiodicarbe.

Les exemples ci-après illustrent l'invention :

Exemple 1 :

En mélangeant sous agitation dans un récipient 350 g de phosalone, 200 g d'acétophénone, 50 g de solvesso 200, 50 g de nonylphénol polyéthoxylé (1 E-O) on obtient un mélange homogène huileux.

De même en mélangeant sous agitation en chauffant aux environs de 40°C dans un autre récipient, 390 ml d'eau, 40 g de condensat d'oxyde de propylène et d'oxyde d'éthylène (EO:PO 70:30) préalablement fondu, 4 g de sel d'amine de dodecylbenzène sulfonate, 20 g de propylène glycol, 12 g d'attapulgite, 12 g de dioxyde de titane sous forme anatase, 2 g d'antimousse on obtient une solution aqueuse homogène.

On coule ensuite dans une cuve bien agitée le mélange huileux dans le mélange aqueux et on complète à 1 l par ajout éventuel d'eau. Ce mélange est ensuite homogénéisé par passage dans un broyeur à bille (bille de verre de 1 mm).

L'émulsion obtenue a la composition suivante (en g/l) :

L'émulsion a la composition suivante (en g/l)

| | | |
|---|---|---|
| - Phosalone | 350 | ) |
| - Acétophénone | 200 | (phase |
| - Solvesso 200 | 50 | )huileuse |
| - nonylphénolmonoéthoxylé | 50 | ( |
| - condensat d'oxyde de propylène et d'oxyde d'éthylène (EO:PO 70:30) | 40 | |
| - sel d'amine du dodecylbenzène sulfonate | 4 | |
| - Propylène glycol | 20 | |
| - Attapulgite | 12 | |
| - Dioxyde de Titane forme anatase | 12 | |
| - Antimousse | 2 | |
| - complément d'eau jusqu'à 1 litre | | |

Les exemples suivants ont été réalisés par le même procédé.

Exemple 2

L'émulsion suivante a été réalisée (en g/l):

- Oxadiazon 100 )
- Aclonifen 300 )
- Acétophénone 300 (phase huileuse
- nonylphénolmonoéthoxylé (1 E.O.) 50 (
- condensat d'oxyde de propylène et d'oxyde d'éthylène (EO:PO 70:30) 34
- sel d'amine du dodecylbenzène sulfonate 3,4
- Propylène glycol 17
- Attapulgite 10
- Dioxyde de Titane forme anatase 10
- Antimousse 1,7
- complément d'eau jusqu'à 1 litre

Exemple 3

L'émulsion suivante a été réalisée (en g/l) :

| | | |
|---|---|---|
| - Linuron | 83 | ) |
| - Aclonifen | 250 | ) |
| - Acétophénone | 350 | (phase huileuse |
| - nonylphénolmonoéthoxylé ( 1 E.O.) | 20 | ( |
| - condensat d'oxyde de propylène et d'oxyde d'éthylène (EO:PO 70:30) | 35 | |
| - sel d'amine du dodecylbenzène sulfonate | 3,5 | |
| - Propylène glycol | 19 | |
| - Attapulgite | 10 | |
| - Dioxyde de Titane forme anatase | 10 | |
| - Antimousse | 2 | |
| - complément d'eau jusqu'à 1 litre | | |

Exemple 4

L'émulsion suivante a été réalisée (en g/l) :

| | | |
|---|---|---|
| - Bifénox | 105 | ) |
| - Aclonifen | 311 | ) |
| - Acétophénone | 330 | (phase huileuse |
| - nonylphénolmonoéthoxylé 1 E.O.) | 50 | ( |
| - condensat d'oxyde de propylène et d'oxyde d'éthylène (EO:PO 70:30) | 35 | |
| - sel d'amine du dodecylbenzène sulfonate | 4 | |
| - Propylène glycol | 20 | |
| — Attapulgite | 12 | |
| - Dioxyde de Titane forme anatase | 12 | |
| - Antimousse | 2 | |
| — complément d'eau jusqu'à 1 litre | | |

Exemple 5 :

| | | |
|---|---|---|
| - Phosalone | 450 | ) |
| - Acétophénone | 200 | (phase |
| - Solvesso 200 | 100 | )huileuse |
| - condensat d'oxyde de propylène et d'oxyde d'éthylène (EO:PO 70:30) | 34 | |
| - sel d'amine du dodecylbenzène sulfonate | 3 | |
| - Propylène glycol | 17 | |
| - Attapulgite | 10 | |
| - Dioxyde de Titane forme anatase | 10 | |
| - Antimousse | 2 | |
| - complément d'eau jusqu'à 1 litre | | |

Exemple 6

L'émulsion suivante a été réalisée (en g/l) :

| | | |
|---|---|---|
| - Alachlore | 180 | ) |
| - Aclonifen | 210 | ) |
| - Acétophénone | 200 | (phase huileuse |
| - Solvesso 200 | 50 | ( |
| - nonyl phénolbiéthoxyle | 50 | |
| - condensat d'oxyde de propylène et d'oxyde d'éthylène (EO:PO 70:30) | 34 | |
| - sel d'amine du dodecylbenzène sulfonate | 4 | |
| - Propylène glycol | 20 | |
| - Attapulgite | 12 | |
| - Dioxyde de Titane forme rutile | 12 | |
| - Antimousse | 2 | |
| - complément d'eau jusqu'à 1 litre | | |

Exemple 7

L'émulsion suivante a été réalisée (en g/l) :

| | | |
|---|---|---|
| - Alachlore | 143 | ) |
| - Aclonifen | 257 | ) |
| - Acétophénone | 150 | (phase huileuse |
| - Solvesso 200 | 50 | ( |
| -condensat d'oxyde de propylène et d'oxyde d'éthylène (EO:PO 70:30) | 47 | |
| - sel d'amine du dodecylbenzène sulfonate | 4,7 | |
| - Propylène glycol | 24 | |
| - Attapulgite | 14 | |
| - Dioxyde de Titane forme anatase | 14 | |
| - Antimousse | 2,4 | |
| - hydroxy propyl cellulose | 1 | |
| - complément d'eau jusqu'à 1 litre | | |

Exemple 8 :

| | | |
|---|---|---|
| - Ethoprofos | 400 | ) |
| - Acétophénone | 50 | (phase huileuse |
| - condensat d'oxyde de propylène et d'oxyde d'éthylène (EO:PO 70:30) | 60 | |
| - sel d'amine du dodecylbenzène sulfonate | 6 | |
| - Propylène glycol | 30 | |
| - Attapulgite | 17 | |
| - Dioxyde de Titane forme rutile | 17 | |
| - Antimousse | 3 | |
| - Colorant | 0,1 | |
| - complément d'eau jusqu'à 1 litre | | |

Les exemples suivants ont été réalisés par le même procédé.

Exemple 9

L'émulsion suivante a été réalisée (en g/l) :

| | | |
|---|---|---|
| - Bromoxynil octanoate | 112,5 | )rapporté au |
| - Bromoxynil heptanoate | 112,5 | )bromoxynil |
| - Solvesso 200 | 100 | (phénol |
| - condensat d'oxyde de propylène et d'oxyde d'éthylène (EO:PO 70:30) | 60 | |
| - sel d'amine du dodecylbenzène sulfonate | 6 | |
| - Propylène glycol | 30 | |
| - Attapulgite | 20 | |
| - Dioxyde de Titane forme anatase | 20 | |
| - Hydroxypropyl cellulose | 2 | |
| - complément d'eau jusqu'à 1 litre | | |

Exemple 10

L'émulsion suivante a été réalisée (en g/l) :

| | | |
|---|---|---|
| - Bromoxynil octanoate | 112,5 | )rapporté au |
| - Bromoxynil heptanoate | 112,5 | )bromoxynil |
| - Huile de colza estérifiée | 50 | (phénol |
| - condensat d'oxyde de propylène et d'oxyde d'éthylène (EO:PO 70:30) | 60 | |
| - sel d'amine du dodecylbenzène sulfonate | 6 | |
| - Propylène glycol | 30 | |
| - Attapulgite | 20 | |
| - Dioxyde de Titane forme anatase | 20 | |
| - Hydroxypropyl cellulose | 2 | |
| - complément d'eau jusqu'à 1 litre | | |

Exemple 11

La suspoémulsion suivante a été réalisée (en g/l) : On disperse sous agitation 163 g de thiodicarbe technique à 92 % dans un mélange contenant :

- Sulfate de polyaryl phénol polyéthoxylé ( 7 OE)............ 25
- Ester phosphorique complexe ..... 25 )
- nonylphénol polyéthoxylé à
- 2, 7, 10 OE ..................... 80
- Désodorisant ...................
- Attapulgite ..................... 20
- Dioxyde de Titane forme anatase . 20
- Antimousse ...................... 5
- complément d'eau jusqu'à 1 litre

On a donc une dispersion de solide dans l'eau. On rajoute ensuite 391 g d'ethion technique à 96 % et on obtient une suspoemulsion homogène que l'on broie au broyeur à billes.

Exemple 12

La suspoémulsion suivante a été réalisée (en g/l) dans les mêmes conditions que ci-dessus :

| | | |
|---|---|---|
| - Ethion technique 96% | 261 | ) |
| - Carbaryl technique 92% | 229 | ) phase huileuse |
| - Sulfate de polyaryl phénol polyéthoxylé ( 7 OE) | 50 | |
| - nonylphénol polyéthoxylé à | | |
| - 2, 7, 10 OE | 85 | |
| - Désodorisant | 10 | |
| - Attapulgite | 15 | |
| - Dioxyde de Titane forme anatase | 30 | |
| - complément d'eau jusqu'à 1 litre | | |

Exemple 13 - Test de stabilité

Les compositions ont été ensuite soumises à différents tests de stabilité:

-En premier lieu on soumet ces compositions à cinq cycles de variations régulières de température pendant cinq semaines de -10°C à 35°C.

-En second lieu ces compositions sont placées pendant un mois à 50°C dans une étuve.

-En troisième lieu ces compositions sont placées pendant trois mois à 35°C.

On constate que ces compositions ne présentent aucun phénomène de séparation de phase ou de floculation à la fin de ces trois tests.

Essai comparatif

A titre d'exemple comparatif, une émulsion a été réalisée selon l'exemple 2, mais en éliminant le dioxyde de titane.

Cette émulsion traitée comme indiqué précédemment 1 mois à 50°C, s'est séparée en deux phases non reversibles par agitation, la rendant impropre à l'utilisation.

Ajoutons enfin qu'en ce qui concerne le dioxyde de titane, le diamêtre des particules est généralement compris entre 0,3 et 0,7 micromêtre ce qui est en fait le diamêtre des dioxydes de titane commerciaux. On doit noter que l'invention n'est pas limitée aux formes physiques citées dans la description. Néanmoins, les formes rutiles ou anatase sont préférées.

**Revendications**

1) Emulsion huile dans l'eau pesticide comprenant

Une substance pesticide lipophile, éventuellement un solvant organique solubilisant ladite substance, de l'eau, un système émulsionnant capable d'assurer la dispersion de la phase huileuse dans la phase aqueuse, ladite émulsion étant caractérisée en ce qu'elle comprend, en outre, un agent dispersant à base de dioxyde de titane.

2) Emulsion huile dans l'eau pesticide comprenant

Une substance pesticide lipophile ayant un point de fusion inférieur à 100°C, éventuellement un solvant organique solubilisant ladite substance, de l'eau, un système émulsionnant capable d'assurer la dispersion de la phase huileuse dans la phase aqueuse, ladite émulsion étant caractérisée en ce qu'elle comprend, en outre, un agent dispersant à base de dioxyde de titane.

3) Emulsion huile dans l'eau pesticide comprenant

Une substance pesticide lipophile ayant un point de fusion située à l'intérieur de la zone de variation thermique à laquelle ladite substance est soumise, notamment lors du stockage, éventuellement un solvant organique solubilisant ladite substance, de l'eau, un système émulsionnant capable d'assurer la dispersion de la phase huileuse dans la phase aqueuse, ladite émulsion étant caractérisée en ce qu'elle comprend, en outre, un agent dispersant à base de dioxyde de titane.

4) Emulsion selon la revendication 1 ou 2 ou 3, caractérisée en ce que le dioxyde de Titane est présent à raison de 1 g/l à 100 g/l d'émulsion.

5) Emulsion selon la revendication 4, caractérisée en ce que le dioxyde de Titane est présent à raison de 5 g/l à 50 g/l d'émulsion.

6) Emulsion huile dans l'eau pesticide selon l'une des revendications précédentes comprenant en grammes :

| | | |
|---|---|---|
| - subtance pesticide | 100 à 800 | ) |
| - solvant | 0 à 350 | (phase |
| - agent tensio actif hydrophobe | 0 à 100 | )huileuse |
| - agent tensio actif hydrophile | 20 à 60 | |
| - eau | complète à 1000 | |

7) Emulsion selon l'une des revendications 2 à 6, caractérisée en ce que la formulation pesticide est choisie parmi la phosalone, le mélange aclonifen + oxadiazon, le mélange linuron + aclonifen, le mélange bifénox + aclonifen, les esters de bromoxynil.

8) Emulsion selon la revendication 7, caractérisée en ce qu'elle contient 100 à 600 g/l d'ester de bromoxynil rapporté au bromoxynil phénol.

9) Emulsion selon l'une des revendications précédentes, caractérisée en ce que elle comprend, en outre, d'autres additifs tels que antimousse, antigel, épaississants.

10) Suspoémulsion obtenue par ajout à l'une les compositions selon les revendications 1 à 9, d'un pesticide solide, notamment le thiodicarbe ou le carbaryl, puis broyage.

11) Procédé de mise en oeuvre de l'émulsion ou suspoémulsion selon l'une des revendications 1 à 10, caractérisé en ce qu'on dilue avec de l'eau afin d'obtenir la composition pesticide efficace.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 171 239 (FARBWERKE HOECHST AG VORMALS MEISTER LUCIUS & BRÜNING)<br>* Page 5, lignes 5-9; exemples 1-3; revendications 1,5 *<br>----- | 1-11 | A 01 N 25/04 |

| | DOMAINES TECHNIQUES RECHERCHES (Int. Cl.4) |
|---|---|
| | A 01 N |

Le présent rapport a été établi pour toutes les revendications

| Lieu de la recherche | Date d'achèvement de la recherche | Examinateur |
|---|---|---|
| LA HAYE | 16-06-1989 | RAVANEL C.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................................
& : membre de la même famille, document correspondant

EPO FORM 1503 03.82 (P0402)